# EUROPÄISCHE PATENTSCHRIFT

(11) **EP 1 508 732 B1**
(45) Veröffentlichungstag und Bekanntmachung des Hinweises auf die Patenterteilung: **04.01.2006**
(21) Anmeldenummer: 03018353.7
(22) Anmeldetag: 13.08.2003
(51) Int. Cl.: F16K 31/06, F16K 27/00

(54) **Ventileinrichtung**
Valve device
Dispositif de soupape

(43) Veröffentlichungstag der Anmeldung: 23.02.2005
(73) Patentinhaber: FESTO AG & Co, 73734 Esslingen (DE)
(72) Erfinder: Bogdanowicz, Grzegorz, Dipl.-Ing., 73760 Ostfildern (DE); Glas, Thomas, Dipl.-Ing., 73734 Esslingen (DE)
(74) Vertreter: Abel, Martin

(56) Entgegenhaltungen:
- DE-A- 4 139 670
- US-A- 4 552 179
- US-A- 5 222 715
- US-A- 5 441 233

## Beschreibung

Die Erfindung betrifft eine Ventileinrichtung,
- mit mindestens einer eine Baueinheit bildenden Magnetventilpatrone, die über eine Magneteinheit mit einem mindestens eine Spule tragenden Spulenträger sowie einen in axialer Verlängerung des Spulenträgers angeordneten Ventilkörper verfügt, wobei der Ventilkörper einen dem Spulenträger zugewandten ersten Ventilsitz und einen vom Spulenträger abgewandten zweiten Ventilsitz aufweist und wobei dem ersten ventilsitz ein erstes Ventilglied vorgelagert ist, das durch einen im Spulenträger verschiebbar gelagerten Magnetanker axial bewegbar ist,
- und mit einem dem zweiten Ventilsitz vorgelagerten zweiten Ventilglied, das über mindestens ein an den beiden Ventilsitzen vorbeigreifendes Koppelelement mit dem ersten Ventilglied bewegungsgekoppelt ist und dem seinerseits ein axial verstellbares Handbetätigungsglied vorgelagert ist.

Eine aus der DE 693 17 655 T2 bekannte Ventileinrichtung dieser Art verfügt über ein aus zwei aneinandergesetzten Gehäusehälften bestehendes Ventilgehäuse, in das eine Magnetventilpatrone eingelegt ist. Die Magnetventilpatrone enthält mehrere Komponenten, die zu einer einheitlich handhabbaren Baueinheit zusammengefasst sind. Unter anderem verfügt die Magnetventilpatrone über einen mit einer Spule ausgestatteten Spulenträger, der einstückig mit einem axial vorgelagerten Ventilkörper verbunden ist. An dem Ventilkörper ist ein dem Spulenträger zugewandter erster Ventilsitz ausgebildet, dem ein an einem beweglichen Magnetanker angeordnetes erstes Ventilglied vorgelagert ist. Durch Erregung der Spule kann der Magnetanker und somit das erste Ventilglied relativ zum ersten Ventilsitz verlagert werden. An der dem ersten Ventilsitz entgegengesetzten Stirnseite ist der Ventilkörper mit einem zweiten Ventilsitz ausgestattet, dem ein in einer Ausnehmung des Ventilgehäuses untergebrachtes separates zweites Ventilglied gegenüberliegt. Dieses ist über mindestens ein Koppelelement mit dem ersten Ventilglied bewegungsgekoppelt. Es kann zudem manuell aktiviert werden, indem ein ebenfalls gesondert in dem Ventilgehäuse angeordnetes Handbetätigungsglied manuell verlagert wird, sodass es auf das zweite ventilglied einwirkt.

Auf Grund der Vielzahl von Einzelteilen erweist sich die Montage der Ventileinrichtung als relativ aufwendig. Als besonders nachteilig kann erwähnt werden, dass eine Funktionsprüfung der unter Verwendung der Magnetventilpatrone ausführbaren Ventilfunktionen nur möglich ist, wenn die Ventileinrichtung einschließlich des die Magnetventilpatrone umschließenden Ventilgehäuses fertig montiert ist. Stellen sich bei einer solchen Prüfung Funktionsstörungen heraus muss die gesamte Ventileinrichtung wieder zerlegt werden.

Aus der DE 41 39 670 A1 geht ebenfalls eine Magnetventilpatrone hervor, die einen einstückig mit einem vorgelagerten Ventilkörper ausgebildeten und eine Spule tragenden Spulenträger aufweist. Der Ventilkörper verfügt lediglich an der dem Spulenträger zugewandten Seite über einen mit einem Ventilglied zusammenwirkenden Ventilsitz. Mittel zur Handbetätigung sind nicht vorhanden.

Es ist die Aufgabe der vorliegenden Erfindung, eine Ventileinrichtung der eingangs genannten Art zu schaffen, die sich rationeller fertigen lässt.

Zur Lösung dieser Aufgabe ist vorgesehen, dass der Ventilkörper einen axial über den zweiten Ventilsitz hinausragenden Gehäusefortsatz aufweist, in dem sowohl das zweite Ventilglied als auch, in von außen zugänglicher Weise, das Handbetätigungsglied gehalten ist, sodass die Komponenten ebenfalls Bestandteil der Magnetventilpatrone sind.

Im Gegensatz zu der in der DE 693 17 655 T2 beschriebenen Bauform sind das zweite Ventilglied und das Handbetätigungsglied nunmehr ebenfalls als Bestandteil der Magnetventilpatrone ausgebildet, sodass die Ventilfunktionen auch ohne ein zusätzliches Ventilgehäuse gegeben sind. Im Rahmen eines Fertigungsprozesses kann somit die korrekte Funktion der Magnetventilpatrone sehr einfach vor dem Einbau in ein zusätzliches Ventilgehäuse überprüft werden, was einen äußerst rationellen Produktionsablauf garantiert. Da alle relevanten Komponenten in der Magnetventilpatrone unter Bildung einer eigenständig handhabbaren Baueinheit vereinigt sind, lässt sich zudem eine mit einer oder mehreren Magnetventilpatronen ausgestattete Ventileinrichtung sehr einfach zusammenbauen. Bevorzugt besitzt die Magnetventilpatrone eine 3/2-Ventilfunktionalität, was die Magnetventilpatrone für den Einsatz als Bestandteil einer Vorsteuerstufe zur Ansteuerung eines fluidisch betätigbaren Hauptventils prädestiniert.

Vorteilhafte Weiterbildungen der Erfindung gehen aus den Unteransprüchen hervor.

Der zur Fixierung des zweiten Ventilgliedes und des Handbetätigungsgliedes vorgesehene Gehäusefortsatz des Ventilkörpers besitzt zweckmäßigerweise einen stirnseitig angesetzten Deckel, der über eine die manuelle Betätigung des Handbetätigungsliedes von außen ermöglichende Durchbrechung verfügt. Beispielsweise ragt das Handbetätigungsglied durch die Durchbrechung hindurch nach außen, oder es kann von außen her, durch die Durchbrechung hindurch, eine Beaufschlagung des nicht nach außen vorstehenden Handbetätigungsgliedes zum Zwecke seiner Betätigung erfolgen.

Durch den Deckel kann die Möglichkeit geschaffen werden, das zweite Ventilglied und das Handbetätigungsglied vor dem Anbringen des Deckels in dem dann frei zugänglichen Innenraum des Gehäusefortsatzes zu platzieren. Der Deckel wird zweckmäßigerweise stoffschlüssig am zugeordneten Bestandteil des Ventilkörpers befestigt, insbesondere durch eine Schweißverbindung. Bei einer bevorzugten Realisierung des Vorsteuerkörpers aus Kunststoffmaterial empfiehlt sich hierbei eine Ultraschall-Schweißverbindung.

An Stelle einer mit einem Deckel ausgestatten mehrteiligen Bauform kann der Gehäusefortsatz auch einstückig ausgebildet sein. In einem solchen Fall ist das Handbetätigungsglied insbesondere durch Einrasten in oder an dem Gehäusefortsatz verliersicher gehalten.

Die Ventileinrichtung kann einen Patronenträger aufweisen, der von mindestens einer Aufnahme durchsetzt ist, in die jeweils eine Magnetventilpatrone mit ihrem Ventilkörper eingesteckt ist. Auf diese weise liegt die Magneteinheit auf der einen Seite des Patronenträgers, während die freie Stirnseite des Ventilkörpers der entgegengesetzten Seite des Patronenträgers zugeordnet ist, wobei die den Patronenträger durchsetzende Ausgestaltung der Aufnahme gewährleistet, dass das Handbetätigungsglied zu seiner Betätigung problemlos zugänglich bleibt.

Der Ventilkörper kann insbesondere mit dem von dem Gehäusefortsatz gebildeten Endabschnitt auf der der Magneteinheit entgegengesetzten Seite aus dem Patronenträger herausragen.

Im an einem Patronenträger montierten Zustand ist zweckmäßigerweise vorgesehen, dass im Ventilkörper verlaufende, peripher am Ventilkörper ausmündende Ventilkanäle mit im Patronenträger verlaufenden Patronenträgerkanälen kommunizieren. Auf diese weise besteht beispielsweise die Möglichkeit, den Ventilträger an einen Zuführkanal und einen Abführkanal für Druckmedium anzuschließen. Sind die ventilkanäle zumindest teilweise so ausgebildet, dass sie den ventilkörper diametral durchsetzen, steht die vorteilhafte Möglichkeit, mehrere Magnetventilpatronen an gemeinsame Patronenträgerkanäle anzuschließen.

Bevorzugt hat der ventilköper zumindest in dem zum Eintauchen in eine Aufnahme eines Patronenträgers vorgesehenen Längenabschnitt eine sich zum freien Ende hin konisch verjüngende Gestalt, wobei die zugeordnete Aufnahme über eine komplementäre Formgebung verfügt. Auf diese Weise ergibt sich eine gute Abdichtung zwischen im Umfangsbereich des Ventilkörpers miteinander kommunizierenden Ventil- und Patronenträgerkanälen.

Der Patronenträger kann Bestandteil eines die Magneteinheit der Magnetventilpatrone umschließenden Ventilgehäuses sein. Dabei kann ein auf der dem Patronenträger entgegengesetzten Seite der Magneteinheit platzierter Ventilgehäusedeckel dazu dienen, die Magneteinheit zu beaufschlagen und dadurch die Magnetventilpatrone in die zugeordnete Aufnahme des Patronenträgers einzupassen.

Nachfolgend wird die Erfindung anhand der beiliegenden Zeichnung näher erläutert. In dieser zeigen:
- Figur 1: eine Seitenansicht einer bevorzugten Ausführungsform der erfindungsgemäßen Ventileinrichtung, wobei strichpunktiert ein Ventilträger angedeutet ist, auf dem die Ventileinrichtung platziert werden kann,
- Figur 2: die einem Endbereich der Ventileinrichtung zugeordnete Vorsteuereinheit in einer Einzeldarstellung und im Längsschnitt, wobei zwei Magnetventilpatronen ersichtlich sind,

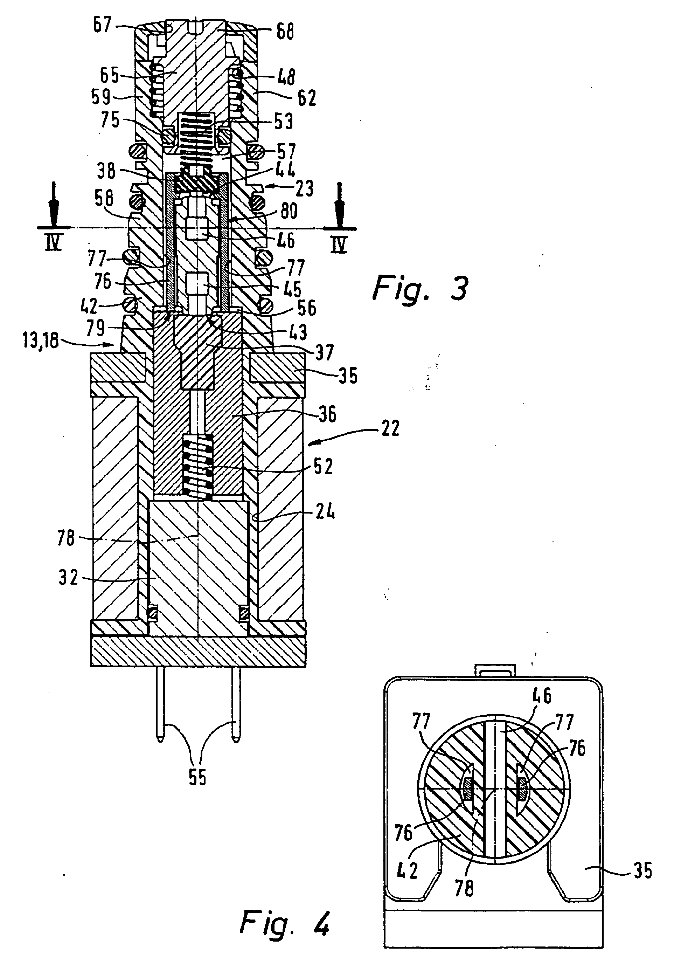

- Figur 3: eine Einzeldarstellung einer Magnetventilpatrone aus Figur 2 gemäß Schnittlinie III - III, und
- Figur 4: die Magnetventilpatrone aus Figur 3 im Querschnitt gemäß Schnittlinie IV -IV.

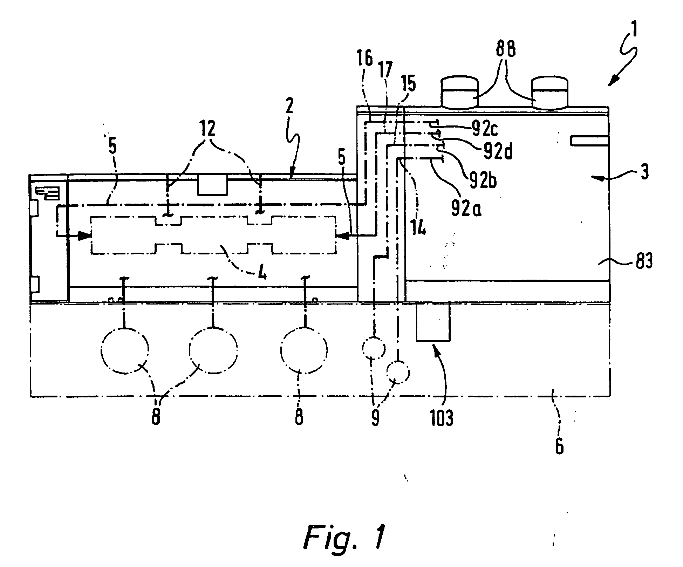

Die Figur 1 zeigt eine Ventileinrichtung 1, die zur Steuerung von Fluidströmen, insbesondere von Druckluft, ausgebildet ist. Sie enthält ein von einem Mehrwegeventil gebildetes Hauptventil 2 und eine stirnseitig daran angeordnete Vorsteuerstufe 3. Das Hauptventil 2 enthält einen schematisch angedeuteten Ventilschieber 4, der über interne Hauptventilkanäle 5 mit einem Druckmedium beaufschlagbar ist, um ihn in eine gewünschte Schaltstellung zu verbringen.

Die Ventileinrichtung 1 sitzt auf einem strichpunktiert angedeuteten, plattenartigen Ventilträger 6, in dem erste Ventilträgerkanäle 8 verlaufen, die mit dem Hauptventil 2 in Verbindung stehen. Das Hauptventil 2 enthält ferner zwei Arbeitskanäle 12, die mit einem nicht näher dargestellten Verbraucher verbindbar sind, beispielsweise einem durch Fluidkraft zu betätigenden Antrieb. Entsprechend der eingestellten Schaltstellung des Ventilschiebers 4 werden die Arbeitskanäle 12 über die ersten Ventilträgerkanäle 8 mit Druckmedium versorgt oder entlüftet, um den angeschlossenen Verbraucher zu betätigen.

Die zum Umschalten des Ventilschiebers 4 erforderliche gesteuerte Beaufschlagung der Hauptventilkanäle 5 übernimmt die Vorsteuerstufe 3. Diese enthält beim Ausführungsbeispiel zwei aus Figur 1 näher ersichtliche, elektrisch aktivierbare Vorsteuerventile 13. Jedes Vorsteuerventil 13 ist für die Ansteuerung eines der beiden Hauptventilkanäle 5 zuständig.

Die beiden Vorsteuerventile 13 sind jeweils an einen Steuer-speisekanal 14 und einen Steuer-Entlüftungskanal 15 angeschlossen, über die die Zufuhr und Abfuhr des zur Ansteuerung des Ventilschiebers 4 dienenden Druckmediums erfolgt. Zweckmäßigerweise sind diese Kanäle im Bereich der zwischen der Ventileinrichtung 1 und dem Ventilträger 6 vorgesehenen Schnittstelle an in dem Ventilträger 6 verlaufende zweite Ventilträgerkanäle 9 entsprechender Funktion angeschlossen.

Jedes Vorsteuerventil 13 kommuniziert mit einem Vorsteuerkanal 16 bzw. 17, der mit einem der Hauptventilkanäle 5 in Verbindung steht. Indem die Vorsteuerventile 13 als 3/2-Wegeventile ausgeführt sind, kann über sie eine abwechselnde Beaufschlagung oder Entlüftung der Vorsteuerkanäle 16, 17 und der mit diesen verbundenen Hauptventilkanäle 5 vorgenommen werden, um den Ventilschieber 4 wunschgemäß zu verlagern und zu positionieren.

Die Komponenten der beiden Vorsteuerventile 13 sind jeweils zu einer einheitlich handhabbaren Baueinheit zusammengefasst, die als Magnetventilpatrone 18 bezeichnet sei. Jede Magnetventilpatrone 18 bildet eine selbsttragende Einheit, deren Komponenten untereinander so verbunden sind, dass sich auch ohne externe Einflüsse eine zusammenhängende Struktur ergibt.

An Stelle wie beim Ausführungsbeispiel mit zwei Magnetventilpatronen 18 könnte die Magnetventileinrichtung 1 entsprechend ihrer Bauform auch mit nur einer Magnetventilpatrone oder mit mehr als zwei Magnetventilpatronen ausgestattet sein. Möglich wäre es auch, die Ventileinrichtung 1 so auszubilden, dass ihre mindestens eine Magnetventilpatrone 18 direkt zur Ansteuerung eines Verbrauchers dient und nicht als Vorsteuerventil fungiert, wobei in diesem Falle das Hauptventil 2 nicht vorhanden wäre. Denkbar wäre es ferner, mindestens eine Magnetventilpatrone 18 zur Ansteuerung eines extern platzierten Hauptventils einzusetzen.

Die Magnetventilpatronen 18 der Ventileinrichtung 1 sind zweckmäßigerweise identisch ausgebaut. Grundsätzlich wäre es jedoch möglich, insbesondere in ihrer Antriebsleistung unterschiedliche Magnetventilpatronen 18 in ein und der selben Ventileinrichtung 1 zusammenzufassen.

Die weitere Beschreibung orientiert sich vorwiegend an einer der beiden Magnetventilpatronen 18, wobei die entsprechenden Ausführungen mangels anders lautender Hinweise auch für die jeweils andere Magnetventilpatrone 18 gelten.

Die jeweilige Magnetventilpatrone 18 verfügt über eine Magneteinheit 22 und eine in axialer Verlängerung daran angeordnete Steuereinheit 23. Diese beiden Einheiten sind fest miteinander verbunden.

Die Magneteinheit 22 verfügt über einen Spulenträger 24, der mit mindestens einer Magnetspule 25 bestückt ist. Im Einzelnen enthält der Spulenträger 24 ein zentrales Führungsrohr 26 mit zwei beabstandet zueinander daran angeordneten Abschlussflanschen 27, 28. Die Magnetspule 25 ist zwischen den beiden Abschlussflanschen 27, 28 auf das Führungsrohr 26 koaxial aufgewickelt.

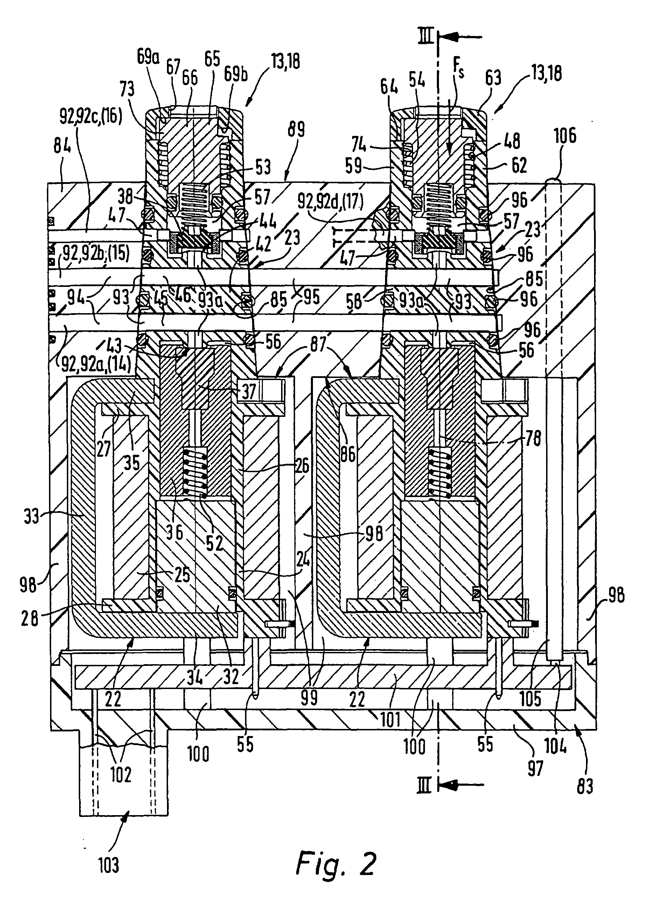

Von der in Figur 2 nach unten weisenden Rückseite her taucht unter Abdichtung ein feststehender Magnetanker 32 in das Führungsrohr 26 ein. Er wird axial außen von einem ferromagnetischen U-förmigen Jochteil 33 übergriffen, zwischen dessen beide Schenkel 34, 35 der Spulenträger 24 längsseits eintaucht. Jeder Schenkel 34, 35 ist einem der Abschlussflansche 27, 28 axial vorgelagert.

Innerhalb des Führungsrohres 26 befindet sich ein dem feststehenden Magnetanker 32 zur Steuereinheit 23 hin axial vorgelagerter, axial beweglicher Magnetanker 36. Er trägt an der der Steuereinheit 23 zugewandten Vorderseite ein insbesondere aus gummielastischem Material bestehendes erstes Ventilglied 37.

Die Steuereinheit 23 besitzt einen in axialer Verlängerung des Spulenträgers 24 angeordneten Ventilkörper 42. Er hat längliche Gestalt und einen geringeren Durchmesser als die Magneteinheit 22.

Beim Ausführungsbeispiel sind der Spulenträger 24 und der ventilkörper 42 einstückig miteinander verbunden und aus Kunststoffmaterial gefertigt. Dies ermöglicht eine besonders kostengünstige Herstellung.

Der bewegliche Magnetanker 36 taucht ein Stück weit in den Ventilkörper 42 ein, wobei sein erstes Ventilglied 37 einem der Magneteinheit 22 zugewandten ersten Ventilsitz 43 axial gegenüberliegt. Der erste Ventilsitz 43 ist ein, insbesondere integraler, Bestandteil des Ventilkörpers 42 und er umgrenzt die Mündung eines den Ventilkörper 42 durchsetzenden ersten Ventilkanals 45.

Der bewegliche Magnetanker 36 ist mit axialem Spiel zwischen dem ersten Ventilsitz 43 und dem feststehenden Magnetanker 32 angeordnet. Eine zwischen den beiden Magnetankern 32, 36 angeordnete, drückend wirkende erste Feder 52 beaufschlagt den beweglichen Magnetanker 36 und mithin das daran vorgesehene erste Ventilglied 37 in Richtung des ersten Ventilsitzes 43. In der deaktivierten Grundstellung der Magnetventilpatrone 18, wenn also die Magnetspule 25 nicht elektrisch erregt ist, liegt das erste Ventilglied 37 auf Grund der Stellkraft der ersten Feder 52 an dem ersten Ventilsitz 43 an und verschließt die zugehörige Mündung des ersten Ventilkanals 45.

Um die Magnetventilpatrone 18 in eine aktivierte Arbeitsstellung zu verlagern, wird die Magnetspule 25 elektrisch erregt, wobei die Erregerspannung über zwei beispielsweise stiftartige Kontaktelemente 55 eingespeist wird, die rückseitig axial vom Spulenträger 24 wegragen. In der Arbeitsstellung ist das erste Ventilglied 37 vom ersten Ventilsitz 43 abgehoben, sodass eine fluidische Verbindung zwischen dem ersten Ventilkanal 45 und der axial zwischen dem beweglichen Magnetanker 36 und dem Ventilkörper 42 definierten ersten Ventilkammer 65 hergestellt ist.

Der erste Ventilsitz 43 ist an einem Basisteil 58 des Ventilkörpers 42 ausgebildet. An der von der Magneteinheit 22 axial abgewandten Stirnseite des Basisteils 58 befindet sich ein insbesondere koaxial zum ersten Ventilsitz 43 angeordneter zweiter Ventilsitz 44. Dieser umgrenzt die Mündung eines ebenfalls im Ventilkörper 42 verlaufenden zweiten Ventilkanals 46.

Dem zweiten Ventilsitz 44 ist ein bevorzugt aus gummielastischem Material bestehendes zweites Ventilglied 38 axial vorgelagert. Dieses sitzt in einer zweiten Aufnahmekammer 48, die von einem axial über den zweiten Ventilsitz 44 hinausragenden Gehäusefortsatz 62 des Ventilkörpers 42 definiert wird. Zweckmäßigerweise ist dieser Gehäusefortsatz 62 einstückig mit dem Basisteil 58 verbunden.

Genauer gesagt enthält der Gehäusefortsatz 62 beim Ausführungsbeispiel ein sich an das Basisteil 58 anschließendes, einstückig mit dem Basisteil 58 verbundenes Ringteil 59, an dem an der der Magneteinheit 22 entgegengesetzten Stirnseite ein Deckel 63 des Gehäusefortsatzes 62 befestigt ist. Der Deckel 63 ist beim Ausführungsbeispiel stoffschlüssig unlösbar mit dem Ringteil 59 verbunden. Zu diesem Zweck ist im Fügebereich eine Schweißverbindung 64 vorgesehen. Indem der Deckel 63 ebenfalls aus Kunststoffmaterial besteht, kann hier eine kostengünstige Ultraschall-Schweißverbindung vorgesehen werden.

In der Aufnahmekammer 48 sitzt ein dem zweiten Ventilglied 38 an der dem zweiten Ventilsitz 44 entgegengesetzten Seite axial vorgelagertes Handbetätigungsglied 65. Durch den es stirnseitig zumindest teilweise übergreifenden Deckel 63 ist das Handbetätigungsglied 65 in der Aufnahmekammer 48 verliersicher gehalten.

Das Handbetätigungsglied 65 ist wie das zweite Ventilglied 38 relativ zum ventilkörper 42 axial verstellbar, wobei eine voneinander unabhängige Verstellbarkeit vorliegt. Zwischen den beiden Teilen stützt sich eine drückend wirkende zweite Feder 53 ab, die das zweite Ventilglied 38 in Richtung des zweiten Ventilsitzes 44 beaufschlagt.

Das Handbetätigungsglied 35 wird durch eine zwischen ihm und dem ventilkörper 42 angeordnete dritte Feder 54 in Richtung zum Deckel 63 in eine aus der Zeichnung hervorgehende unbetätigte Stellung vorgespannt. Die dritte Feder 54 umschließt das Handbetätigungsglied 65 koaxial, wobei sie sich zwischen einem dem Deckel 63 zugeordneten Abschlussbund 66 des Handbetätigungsgliedes 65 und einer Ringstufe an der Innenfläche der Aufnahmekammer 48 abstützt.

Durch Aufbringen einer zum Basisteil 58 hin gerichteten axialen Stellkraft Fₛ auf das Handbetätigungsglied 65 kann dieses aus der unbetätigten Stellung in eine näher an das Basisteil 58 verlagerte betätigte Stellung bewegt werden. Möglich macht dies eine Durchbrechung 67 in der stirnseitigen Abschlusswand des Deckels 63, über die das Handbetätigungsglied 65 von außen her zugänglich ist. Beim Ausführungsbeispiel ragt das Handbetätigungsglied 65 in der unbetätigten Stellung mit einem Betätigungsabschnitt 68 von der Aufnahmekammer 48 her in die Durchbrechung 67 hinein, wobei der Betätigungsabschnitt 68 so ausgeführt ist, dass sich ein manuell betätigbares Werkzeug ansetzen lässt, mit dem sich manuell die Stellkraft Fₛ aufbringen lässt. Das Handbetätigungsglied 65 wird einfach mit einer Druckkraft beaufschlagt, sodass es in Richtung zur Magneteinheit 22 verschoben wird.

Beim Ausführungsbeispiel ist das Handbetätigungsglied 65 in der betätigten Stellung arretierbar. Zu diesem Zweck sind an der Begrenzungsfläche der Aufnahmekammer 48, insbesondere am Deckel 63, zwei zur Magneteinheit 22 weisende Anschlagflächen 69a, 69b vorgesehen, die mit axialem Abstand an unterschiedlichen Stellen des Umfanges der Aufnahmekammer 48 platziert sind. Das Handbetätigungsglied 65 liegt in der unbetätigten Stellung mit einem radialen Fortsatz 73 an der weiter von der Magneteinheit 22 entfernten ersten Anschlagfläche 69a an. Zum Arretieren in der betätigten Stellung wird das Handbetätigungsglied 65 in der schon erwähnten Weise in die betätigte Stellung verschoben und wird anschließend ein Stück weit verdreht, sodass der Fortsatz 73 unter die näher zur Magneteinheit 22 liegende zweite Anschlagfläche 69b geschwenkt wird. Die jeweilige Stellung wird durch die dritte Feder 54 stabilisiert. Zum Umschalten in die unbetätigte Stellung genügt ein Zurückdrehen des Handbetätigungsgliedes 65, bis der Fortsatz 73 wieder unter der zweiten Anschlagfläche 69b hervorgeschwenkt ist.

Das Handbetätigungsglied 65 steht ringsum in abgedichteter Verbindung mit der peripheren Innenoberfläche 74 der Aufnahmekammer 48. Beim Ausführungsbeispiel ist das Handbetätigungsglied 65 hierzu am Außenumfang mit einer konzentrisch aufgesetzten ringförmigen Dichtung 75 versehen, die an der Innenoberfläche 74 anliegt. Da das Handbetätigungsglied 65 luftundurchlässig ausgebildet ist, begrenzt es mithin zusammen mit dem Basisteil 58 eine zweite Ventilkammer 57, in der sich das zweite Ventilglied 38 und auch die zweite Feder 53 befinden.

Die zweite Ventilkammer 57 kommuniziert mit einem den Ventilkörper 42 durchsetzenden dritten Ventilkanal 47. Alle drei Ventilkanäle 45, 46, 47 münden umfangsseitig am Ventilkörper 42 aus.

Mindestens ein Koppelelement 76 greift an den beiden Ventilsitzen 43, 44 vorbei, wobei es sich zwischen den beiden Ventilkammern 56, 57 erstreckt. Beim Ausführungsbeispiel sind zwei solcher Koppelelemente 76 vorhanden, die jeweils stabförmig ausgebildet sind. Sie durchsetzen jeweils einen sich axial erstreckenden Verbindungskanal 77, der das Basisteil 58 in Längsrichtung durchsetzt und mit seinen entgegengesetzten Endbereichen zu den beiden Ventilkammern 56, 57 ausmündet. Bevorzugt sind die beiden Verbindungskanäle 77 wie auch die diese durchsetzenden Koppelelemente 76 mit Bezug zu der die Zentren der beiden Ventilsitze 43, 44 durchsetzenden Längsachse 78 einander diamentral gegenüberliegend angeordnet.

Über die Koppelelemente 76 sind die beiden Ventilglieder 37, 38 axial bewegungsgekoppelt. Hierzu ist beim Ausführungsbeispiel jedes Koppelelement 76 einenends fest mit dem zweiten Ventilglied 38 verbunden und ist andernends in der Lage, mit seiner dortigen Stirnfläche 79 im Sinne einer Übertragung einer Schubkraft auf den das erste Ventilglied 37 tragenden beweglichen Magnetanker 36 einzuwirken.

Bevorzugt sind die beiden Koppelelemente 76 Bestandteil einer bevorzugt einstückigen Koppeleinheit 80, die bei noch nicht montiertem Deckel 63 von der Seite des Gehäusefortsatzes 62 her durch die Aufnahmekammer 48 hindurch in den Ventilkörper eingesteckt ist, wobei die Koppelelemente 76 durch die Verbindungskanäle hindurchgreifen und sich im Rahmen einer losen Verbindung, die lediglich Druckkräfte, aber keine Zugkräfte übertragen kann, an dem beweglichen Magnetanker 36 abstützen.

Die beiden Magnetventilpatronen 18 sind in einem Ventilgehäuse 83 der Vorsteuerstufe 3 untergebracht. Über dieses Ventilgehäuse 83 ist die Vorsteuerstufe 3 gemäß Figur 1 beim Ausführungsbeispiel an dem Hauptventil 2 befestigt.

Eine Wand des Ventilgehäuses 83 ist von einem bevorzugt plattenartigen Körper gebildet, der die beiden Magnetventilpatronen 18 trägt und als Patronenträger 84 bezeichnet sei. Für jede Magnetventilpatrone 18 ist der Patronenträger 84 mit einer ihn durchsetzenden Aufnahme 85 ausgestattet, in die die zugeordnete Magnetventilpatrone 18 mit ihrem Ventilkörper 62 von einer Innenfläche 86 her eingesteckt ist. Die Einstecktiefe ist dadurch definiert, dass die Magneteinheit 22 mit der dem Ventilkörper 42 zugewandten vorderen Stirnfläche 87 an der erwähnten Innenfläche 86 zur Anlage gelangt. Beim Ausführungsbeispiel stützt sich hierbei der dem Ventilkörper 42 benachbarte vordere Schenkel 35 an der Innenfläche 86 ab.

Da die Aufnahme 85 den Patronenträger 84 durchsetzt, bleibt das Handbetätigungsglied 65 von der der Einsteckseite entgegengesetzten Außenseite des Patronenträgers 84 her zur bedarfsgemäßen Betätigung zugänglich. In diesem Zusammenhang ist beim Ausführungsbeispiel vorgesehen, dass der Ventilkörper 42 mit dem von dem Gehäusefortsatz 62 gebildeten Endabschnitt 88, der auch die Durchbrechung 67 aufweist, auf der der Magneteinheit 22 entgegengesetzten Seite aus dem Patronenträger 84 herausragt und somit über die dortige Außenfläche 89 des Patronenträgers 84 vorsteht (vgl. auch Figur 1).

In dem Patronenträger 84 verlaufen mehrere Kanäle, die als Patronenträgerkanäle 92 bezeichnet seien. Ein erster Patronenträgerkanal 92a kommuniziert mit dem Steuer-Speisekanal 14, ein zweiter Patronenträgerkanal 92b mit dem Steuer-Entlüftungskanal 15 und ein dritter bzw. vierter Patronenträgerkanal 92c, 92d mit je einem der Vorsteuerkanäle 16, 17.

Die ersten und zweiten Patronenträgerkanäle 92, 92b münden jeweils umfangsseitig in jede der beiden Aufnahmen 85 ein.

Dort kommuniziert der erste Patronenträgerkanal 92a mit dem auf gleicher axialer Höhe am Außenumfang des Basisteils 58 ausmündenden ersten Ventilkanals 45 des Ventilkörpers 42.

In gleicher Weise steht der axial beabstandet zum ersten Patronenträgerkanal 92a in die Aufnahme 85 einmündende zweite Patronenträgerkanal 92b mit dem am Außenumfang des Basisteils 58 ausmündenden zweiten Ventilkanal 64 in Verbindung.

Diese Verbindungen lassen sich beim Ausführungsbeispiel sehr einfach durch linear gestaltete erste und zweite Patronenträgerkanäle 92a, 92b realisieren, indem die ersten und zweiten Ventilkanäle 46, 47 jeweils einen den Ventilkörper 42 in dem zwischen den beiden Ventilsitzen 43, 44 liegenden Bereich diamentral durchsetzenden Hauptast 93 aufweisen, der einenends mit einem ankommenden Abschnitt 94 des ersten bzw. zweiten Patronenträgerkanal 92a, 92b verbunden ist und andernends mit einem diametral gegenüberliegend abgehenden Abschnitt 95 des betreffenden Patronenträgerkanals 92a, 92b kommuniziert, der zur zweiten Aufnahme 85 verläuft und in Bezug auf die dortigen Hauptäste 93 einen ankommenden Kanalabschnitt bildet.

Auf diese Weise wäre es prinzipiell möglich, eine beliebige Anzahl von Ventilkörpern 42 in einer linear aufeinanderfolgenden Reihe anzuordnen und an ein und den selben ersten und zweiten Patronenträgerkanal 92a, 92b anzuschließen.

Von den Hauptästen 93 geht jeweils ein Nebenast 93a ab, der in Richtung der Längsachse 78 verläuft und zur zugeordneten Ventilkammer 56, 57 ausmündet, wo die Mündung vom entsprechenden ersten bzw. zweiten Ventilsitz 43, 44 umgrenzt ist.

Der dritte und vierte Patronenträgerkanal 92c, 92d stehen mit jeweils nur einer der Aufnahmen 85 in Verbindung, indem sie mit axialem Abstand zu den ersten und zweiten Patronenträgerkanälen 92a, 92b umfangsseitig in die betreffende Aufnahme 85 einmünden und dort mit dem am Außenumfang des Ventilkörpers 42 ausmündenden dritten Ventilkanal 47 in Verbindung stehen.

Zur fluiddichten Abrennung der einzelnen Kanäle ist der Ventilkörper 42 am Außenumfang mit mehreren axial zueinander beabstandeten Dichtringen 96 bestückt, die am Innenumfang der Aufnahme 85 dichtend anliegen. Die Dichtringe 96 sind so verteilt, dass sich die Übergänge zwischen miteinander kommunizierenden Patronenträgerkanälen und Ventilkanälen zwischen jeweils zwei axial benachbarten Dichtringen 96 befinden.

Um eine optimale Abdichtung zu erzielen, sind die Magnetventilpatronen 18 in dem in eine Aufnahme 85 eintauchenden Abschnitt ihrer Ventilkörper 42 mit sich zum freien Ende hin verjüngenden Durchmesser ausgebildet. Die Ventilkörper 42 haben eine sich im Wesentlichen konisch verjüngende Gestalt, wobei die Aufnahme 85 in dem mit dem konischen Längenabschnitt des Ventilkörpers 42 zusammenarbeitenden Bereich über eine komplementäre konische Formgebung verfügt. Werden die Ventilkörper 42 axial in die Aufnahmen 85 hineingedrückt ergibt sich somit eine starke Pressung zwischen einerseits den Dichtringen 96 und andererseits der Innenfläche der Aufnahme 85 und den die Dichtringe 96 abstützenden Flächen des Ventilkörpers 42. Diese abstützenden Flächen sind insbesondere von den Innenflächen am Außenumfang des Ventilkörpers 42 angeordneter Ringnuten gebildet, in denen die Dichtringe 96 gehalten sind.

Ein weiterer Vorteil der konischen Gestaltung besteht darin, dass die Magnetventilpatrone 18 annähernd axial druckkraftausgeglichen in der Aufnahme 85 einsitzt, sodass nur geringe Kräfte notwendig sind, um die Magnetventilpatronen 18 in den Aufnahmen 85 zu fixieren.

Beim Ausführungsbeispiel werden die Haltekräfte von einem auf der den Patronenträger 84 entgegengesetzten Seite der Magneteinheiten 22 angeordneten Ventilgehäusedeckel 97 aufgebracht, der am Patronenträger 84 gehalten ist. Beim Ausführungsbeispiel besitzt das Ventilgehäuse 83 sich ausgehend vom Patronenträger 84 in Richtung der Magneteinheiten 22 erstreckende Seitenwände 98, durch die mehrere, jeweils eine Magneteinheit 22 enthaltende Aufnahmekammern 99 definiert werden und an die endseitig der Ventilgehäusedeckel 97 angebracht ist, unter gleichzeitigem Verschließen der Aufnahmekammern 99.

An der Innenseite des Ventilgehäusedeckels 97 sind beispielsweise von einem oder mehreren Vorsprüngen gebildete Beaufschlagungsmittel 100 angeformt, die die Magneteinheiten 22 rückseitig beaufschlagen und somit die Magnetventilpatronen 18 in die Aufnahmen 85 ständig hineindrücken.

Es versteht sich, dass die Magnetventilpatronen 18 auch auf andere Weise in den Aufnahmen 85 gehalten werden können. Beispielsweise könnten zwischen dem Ventilkörper 42 und dem Patronenträger 84 wirksame Sicherungsmittel vorgesehen werden. Hierbei kann es sich beispielsweise um einen Sicherungsring handeln, der an dem über die Außenfläche 89 vorstehenden halsförmigen Endabschnitt 88 des Ventilkörpers 42 lösbar fixiert ist. Ein Vorteil der Magnetventilpatrone 18 besteht darin, dass sie schon vor dem Einbau in den Patronenträger 84 voll funktionsfähig ist, und zwar sowohl in elektrischer als auch in fluidtechnischer Hinsicht einschließlich der Funktion der Handbetätigungsmaßnahmen. Daher kann die Magnetventilpatrone 18 vor der Installation hinsichtlich korrekter Funktionsfähigkeit geprüft werden, was eine sehr rationelle Fertigung zulässt, weil mögliche Störungen sehr frühzeitig entdeckt werden.

Indem sich sämtliche ventilkanäle der Magnetventilpatrone im Ventilkörper 42 befinden, kann im Bereich der Rückseite der Magneteinheiten 22 auf Ventilkanäle verzichtet werden. Dieser Bereich steht daher optimal für die elektrische Kontaktierung der Magneteinheiten 22 zur Verfügung. Beim Ausführungsbeispiel ist in diesem Zusammenhang eine sich rückseitig über sämtliche Magneteinheiten 22 erstreckende Leiterplatte 101 vorgesehen, die mit den Kontaktelementen 55 der Magneteinheiten 22 in Verbindung steht und von der Anschlusskontakte 102 abgehen, die zu einem beispielsweise als Steckvorrichtung ausgebildeten zentralen Anschlussteil 103 führen, das außen am Ventilgehäusedeckel 97 vorgesehen ist und über das die für den Betrieb der Magnetventilpatronen 18 erforderlichen elektrischen Signale eingespeist werden können.

Die Leiterplatte 101 kann bei Bedarf mit mindestens einem den Betätigungszustand signalisierenden optischen Anzeigemittel 104 ausgestattet sein, das Licht aussenden kann. Um die Lichtsignale im Bereich der Außenfläche 89 des Patronenträgers 84 sichtbar zu machen, kann mindestens ein sich längsseits neben den Magnetventilpatronen 18 erstreckender Lichtleiter 105 vorgesehen sein, dessen eines Ende im Bereich der Anzeigemittel 104 liegt und der den Patronenträger 84 durchsetzt, sodass sein anderes Ende 106, an dem die Lichtsignale sichtbar werden, im Bereich der Außenfläche 89 neben den Endabschnitten 88 der Ventilkörper 42 liegt.

Je nach Ausgestaltung der Ventileinrichtung 1 kann der Patronenträger 84 auch mit mehr oder weniger als zwei Magnetventilpatronen 18 bestückt sein. Auch ist es nicht notwendigerweise erforderlich, den Patronenträger 84 als Bestandteil eines Gehäuses auszubilden.

Eine typische Betriebsweise einer Magnetventilpatrone 18, die beim Ausführungsbeispiel eine 3/2-Ventilfunktionalität hat, stellt sich wie folgt dar:

Bei deaktivierter Magneteinheit 22 wird der erste Ventilkanal 45 durch das erste Ventilglied 37 verschlossen. Auf Grund des Zusammenwirkens mit den Koppelelementen 76 ist dabei das zweite Ventilglied 38 vom zweiten Ventilsitz 44 abgehoben. In diesem Zusammenhang ist zu erwähnen, dass die Stellkraft der zweiten Feder 53 geringer ist als diejenige der ersten Feder 52.

In dieser Grundstellung steht folglich der dritte Ventilkanal 47 über die zweite Ventilkammer 57 mit dem zweiten Ventilkanal 46 in Verbindung, während der erste Ventilkanal 45 abgesperrt ist. Bei der oben geschilderten Kanalbelegung ist somit der mit dem dritten Ventilkanal 47 verbundene Vorsteuerkanal 16 bzw. 17 über den Steuer-Entlüftungskanal 15 entlüftet und der ventilschieber 4 erfährt keine Stellkraft.

Bei aktivierter Magneteinheit 22 ist der bewegliche Magnetanker 36 entgegen der Kraft der ersten Feder 52 angezogen und vom ersten Ventilsitz 43 abgehoben. Gleichzeitig sitzt das zweite Ventilglied 38 dicht auf dem zweiten Ventilsitz 44 auf, weil es durch die zweite Feder 53 nachgeführt wird. Der dritte Ventilkanal 47 steht somit über die zweite Ventilkammer 57, die Verbindungskanäle 77 und die erste Ventilkammer 56 mit dem ersten Ventilkanal 45 in Verbindung, während der zweite Ventilkanal 46 abgesperrt ist. Somit erfolgt ausgehend vom Steuer-Speisekanal 14 eine Fluidbeaufschlagung des betreffenden Vorsteuerkanals 16, 17 und somit das Ausüben einer Stellkraft auf den ventilschieber 4.

Dieser letztgenannte Zustand lässt sich bei deaktivierter Magneteinheit 22 auch durch manuelles Betätigen des Handbetätigungsgliedes 65 erreichen. Dabei wird das Handbetätigungsglied 65 axial nach innen gedrückt, sodass es direkt und/oder unter Vermittlung der zweiten Feder 53 auf das zweite Ventilglied 38 einwirkt und dieses in die am zweiten Ventilsitz 44 anliegende Schließstellung verlagert. Durch die mit dem zweiten Ventilglied 38 verbundenen Koppelelemente 76 wird dabei gleichzeitig eine der Kraft der ersten Feder 52 entgegenwirkende Stellkraft auf den beweglichen Magnetanker 36 ausgeübt, sodass das erste Ventilglied 37 vom ersten Ventilsitz 43 abhebt.

## Patentansprüche

1. Ventileinrichtung
- mit mindestens einer eine Baueinheit bildenden Magnetventilpatrone (18), die über eine Magneteinheit (22) mit einem mindestens eine Spule (25) tragenden Spulenträger (24) sowie einen in axialer Verlängerung des Spulenträgers (24) angeordneten Ventilkörper (42) verfügt, wobei der Ventilkörper (42) einen dem Spulenträger (24) zugewandten ersten Ventilsitz (43) und einen vom Spulenträger (24) abgewandten zweiten Ventilsitz (44) aufweist und wobei dem ersten Ventilsitz (43) ein erstes Ventilglied (37) vorgelagert ist, das durch einen im Spulenträger (24) verschiebbar gelagerten Magnetanker (36) axial bewegbar ist,
- und mit einem dem zweiten Ventilsitz (44) vorgelagerten zweiten Ventilglied (38), das über mindestens ein an den beiden Ventilsitzen (43, 44) vorbeigreifendes Koppelelement (76) mit dem ersten Ventilglied (37) bewegungsgekoppelt ist und dem seinerseits ein axial verstellbares Handbetätigungsglied (65) vorgelagert ist, **dadurch gekennzeichnet, dass** der Ventilkörper (42) einen axial über den zweiten Ventilsitz hinausragenden Gehäusefortsatz (62) aufweist, in dem sowohl das zweite Ventilglied (38) als auch, in von außen zugänglicher Weise, das Handbetätigungsglied (65) gehalten ist, sodass die Komponenten ebenfalls Bestandteil der Magnetventilpatrone (18) sind.

2. ventileinrichtung nach Anspruch 1, **dadurch gekennzeichnet, dass** der Gehäusefortsatz (62) einen stirnseitig angesetzten Deckel (63) aufweist, der über eine die manuelle Betätigung des Handbetätigungsgliedes (65) von außen ermöglichende Durchbrechung (67) verfügt.

3. Ventileinrichtung nach Anspruch 2, **dadurch gekennzeichnet, dass** der Deckel (63) stoffschlüssig, insbesondere durch eine Schweißverbindung, befestigt ist.

4. Ventileinrichtung nach Anspruch 2 oder 3, **dadurch gekennzeichnet, dass** der Gehäusefortsatz (62) ein einstückig mit dem die Ventilsitze (43, 44) aufweisenden Basisteil (58) verbundenes Ringteil (59) aufweist, an dessen Stirnseite der Deckel (63) befestigt ist.

5. Ventileinrichtung nach einem der Ansprüche 1 bis 4, **gekennzeichnet durch** eine das erste Ventilglied (37) in Richtung des ersten Ventilsitzes (43) beaufschlagende erste Feder (52), eine sich zwischen dem zweiten Ventilglied (38) und dem Handbetätigungsglied (65) abstützende zweite Feder (53) und eine sich zwischen dem Ventilkörper (42) und dem Handbetätigungsglied (65) abstützende, das Handbetätigungsglied (65) in eine unbetätigte Stellung vorspannende dritte Feder (54).

6. ventileinrichtung nach Anspruch 5, **dadurch gekennzeichnet, dass** das erste Ventilglied (37) an dem bewegbaren Magnetanker (36) angeordnet ist, wobei die erste Feder (52) auf den bewegbaren Magnetanker (36) einwirkt.

7. Ventileinrichtung nach einem der Ansprüche 1 bis 6, **dadurch gekennzeichnet, dass** mehrere zueinander parallele, stabförmige Koppelelemente (76) zu einer Koppeleinheit (76) zusammengefasst sind, an der einenends das zweite Ventilglied (38) festgelegt ist und das sich andernends an dem das erste Ventilglied (37) aufweisenden beweglichen Magnetanker (36) abstützen kann.

8. Ventileinrichtung nach Anspruch 7, **dadurch gekennzeichnet, dass** die Koppeleinheit (76) von der Seite des Gehäusefortsatzes (62) her in den Ventilkörper (42) eingesteckt ist, wobei die Koppelelemente (76) durch am Umfang der Ventilsitze (43, 44) angeordnete Verbindungskanäle (77) hindurchgreifen.

9. Ventileinrichtung nach einem der Ansprüche 1 bis 8, **dadurch gekennzeichnet, dass** die beiden Ventilsitze (43, 44) jeweils einem eigenen Ventilkanal (45, 46) zugeordnet sind, der umfangsseitig am Ventilkörper (42) ausmündet.

10. Ventileinrichtung nach Anspruch 9, **dadurch gekennzeichnet, dass** die beiden Ventilkanäle (45, 46) jeweils einen den Ventilkörper (62) in dem zwischen den beiden Ventilsitzen (43, 44) liegenden Bereich diametral durchsetzenden Hauptast (93) und einen mit dem Hauptast (93) verbundenen, zu einem der Ventilsitze (43, 44) ausmündenden Nebenast (93a) aufweisen.

11. ventileinrichtung nach Anspruch 9 und 10, **dadurch gekennzeichnet, dass** von der das zweite Ventilglied (38) aufnehmenden Ventilkammer (57) ein umfangsseitig am Ventilkörper (42) ausmündender weiterer Ventilkanal (47) abgeht.

12. ventileinrichtung nach einem der Ansprüche 1 bis 11, **dadurch gekennzeichnet, dass** der Spulenträger (24) und der Ventilkörper (42) einstückig miteinander verbunden sind und insbesondere aus Kunststoffmaterial bestehen.

13. Ventileinrichtung nach einem der Ansprüche 1 bis 12, **gekennzeichnet durch** einen Patronenträger (84) mit mindestens einer diesen durchsetzenden Aufnahme (85), in die eine Magnetventilpatrone (18) mit ihrem Ventilkörper (42) eingesteckt ist.

14. ventileinrichtung nach Anspruch 13, **dadurch gekennzeichnet, dass** der Ventilkörper (42) mit dem von dem Gehäusefortsatz (62) gebildeten Endabschnitt (88) auf der der Magneteinheit (22) entgegengesetzten Seite aus dem Patronenträger (84) herausragt.

15. Ventileinrichtung nach Anspruch 13 oder 14, **dadurch gekennzeichnet, dass** der Patronenträger (84) Bestandteil eines die Magneteinheit (22) der Magnetventilpatrone (18) zumindest teilweise umschließenden Ventilgehäuses (83) ist.

16. Ventileinrichtung nach Anspruch 15, **gekennzeichnet durch** einen auf der dem Patronenträger (84) entgegengesetzten Seite der Magneteinheit (22) angeordneten Ventilgehäusedeckel (97), an dessen Innenseite Beaufschlagungsmittel (100) angeformt sind, die die Magneteinheit (22) in Richtung des Patronenträgers (84) beaufschlagen.

17. Ventileinrichtung nach einem der Ansprüche 13 bis 16, **dadurch gekennzeichnet, dass** der Ventilkörper (42) zumindest in dem in die Aufnahme (85) eintauchenden Abschnitt eine sich zum freien Ende hin konisch verjüngende Gestalt hat, wobei die zugeordnete Aufnahme (85) im entsprechenden Bereich eine komplementäre Formgebung aufweist.

18. Ventileinrichtung nach einem der Ansprüche 13 bis 17, **gekennzeichnet durch** im Patronenträger (84) verlaufende, umfangsseitig in die Aufnahme (85) einmündende Patronenträgerkanäle (92), die mit am Außenumfang des Ventilkörpers (42) ausmündenden Ventilkanälen (45, 46, 47) in Verbindung stehen.

19. Ventileinrichtung nach einem der Ansprüche 13 bis 18, **dadurch gekennzeichnet, dass** der Patronenträger (84) mit mehreren in entsprechende Aufnahmen (85) eingesteckten Magnetventilpatronen (18) ausgestattet ist.

20. Ventileinrichtung nach einem der Ansprüche 13 bis 19, **dadurch gekennzeichnet, dass** der mit mindestens einer Magnetventilpatrone (18) ausgestattete Patronenträger (84) Bestandteil einer an einem fluidisch betätigbaren Hauptventil (2) angeordneten Vorsteuerstufe (3) ist.

## Claims

1. Valve arrangement
- with at least one solenoid valve cartridge (18) forming a unit, which features a solenoid unit (22) with a coil holder (24) supporting at least one coil (25) and a valve body (42) representing an axial extension of the coil holder (24), wherein the valve body (42) has a first valve seat (43) adjacent to the coil holder (24) and a second valve seat (44) remote from the coil holder (24), and wherein in front of the first valve seat (43) there is a first valve member (37) axially movable by a solenoid armature (36) guided for movement in the coil holder (24),
- and with a second valve member (38) located in front of the second valve seat (44), which is coupled for movement with the first valve member (37) by at least one coupling element (76) extending past the two valve seats (43, 44), and in front of which is provided an axially adjustable manual control element (65), **characterised in that** the valve body (42) has a housing extension (62) axially projecting beyond the second valve seat, in which both the second valve member (38) and, accessible from outside, the manual control element (65) are housed, so that these components likewise form part of the solenoid valve cartridge (18).

2. Valve arrangement according to claim 1, **characterised in that** the housing extension (62) features an end-mounted cover (63) provided with an opening (67) for the manual operation of the manual control element (65) from outside.

3. Valve arrangement according to claim 2, **characterised in that** the cover (63) is attached by material locking, in particular by means of a welded joint.

4. Valve arrangement according to claim 2 or 3, **characterised in that** the housing extension (62) features an annular part (59) integral with the base part (58) with the valve seats (43, 44), to the end face of which the cover (63) is attached.

5. Valve arrangement according to any of claims 1 to 4, **characterised by** a first spring (52) loading the first valve member (37) in the direction of the first valve seat (43), a second spring (53) supported between the second valve member (38) and the manual control element (65) and a third spring (54) supported between the valve body (42) and the manual control element (65) and preloading the manual control element (65) towards a non-operated position.

6. Valve arrangement according to claim 5, **characterised in that** the first valve member (37) is located on the movable solenoid armature (36), the first spring (52) acting on the movable solenoid armature (36).

7. Valve arrangement according to any of claims 1 to 6, **characterised in that** a plurality of parallel, rod-shaped coupling elements (76) is combined to form a coupling unit (76), to one end of which the second valve member (38) is attached, while the other end is supported on the movable solenoid armature (36) on which the first valve member (37) is located.

8. Valve arrangement according to claim 7, **characterised in that** the coupling unit (76) is inserted into the valve body (42) from the side of the housing extension (62), the coupling elements (76) passing through connecting passages (77) arranged on the circumference of the valve seats (43, 44).

9. Valve arrangement according to any of claims 1 to 8, **characterised in that** each of the two valve seats (43, 44) is assigned to its own valve passage (45, 46) terminating at the circumference of the valve body (42).

10. Valve arrangement according to claim 9, **characterised in that** each of the two valve passages (45, 46) has a main branch (93) passing diametrically through the valve body (62) in the area between the two valve seats (43, 44) and a secondary branch (93a) connected to the main branch (93) and terminating at one of the valve seats (43, 44).

11. Valve arrangement according to claims 9 and 10, **characterised in that** a further valve passage (47) terminating at the circumference of the valve body (42) branches off the valve chamber (57) housing the second valve member (38).

12. Valve arrangement according to any of claims 1 to 11, **characterised in that** the coil holder (24) is integrally joined to the valve body (42), both parts being made of a plastic material in particular.

13. Valve arrangement according to any of claims 1 to 12, **characterised by** a cartridge holder (84) with at least one location (85) passing through it, into which a solenoid valve cartridge (18) with its valve body (42) is inserted.

14. Valve arrangement according to claim 14, **characterised in that** the end section (88) of valve body (42), which is represented by the housing extension (62), projects from the cartridge holder (84) on the side opposite the solenoid unit (22).

15. Valve arrangement according to claim 13 or 14, **characterised in that** the cartridge holder (84) forms part of a valve housing (83) which at least partially encloses the solenoid unit (22) of the solenoid valve cartridge (18).

16. Valve arrangement according to claim 15, **characterised by** a valve housing cover (97) located on that side of the solenoid unit (22) which is opposite the cartridge holder (84), the inside of which features integral pressurisation means (100) loading the solenoid unit (22) in the direction of the cartridge holder (84).

17. Valve arrangement according to any of claims 13 to 16, **characterised in that** the valve body (42) conically tapers towards the free end at least in the section dipping into the location (85), the location (85) having a complementary shape in the corresponding area.

18. Valve arrangement according to any of claims 13 to 17, **characterised by** cartridge holder passages (92) running within the cartridge holder (84) and terminating at the circumference of the location (85), which are connected to valve passages (45, 46, 47) terminating at the outer circumference of the valve body (42).

19. Valve arrangement according to any of claims 13 to 18, **characterised in that** the cartridge holder (84) is fitted with a plurality of solenoid valve cartridges (18) inserted into corresponding locations (85).

20. Valve arrangement according to any of claims 13 to 19, **characterised in that** the cartridge holder (84) fitted with at least one solenoid valve cartridge (18) is part of a pilot stage (3) located on a fluid-operated main valve (2).

## Revendications

1. Dispositif de soupape, comprenant :
- au moins une cartouche d'électrovanne (18) formant une unité modulaire et disposant d'une unité magnétique (22) avec un support de bobine (24) portant au moins une bobine (25) ainsi que d'un corps de vanne (42) disposé dans un prolongement axial du support de bobine (24), dans lequel le corps de vanne (42) présente un premier siège de vanne (43) tourné vers le support de bobine (24) et un deuxième siège de vanne (44) tourné à l'opposé du support de bobine (24), et dans lequel un premier obturateur de vanne (37) est placé devant le premier siège de vanne (43), l'obturateur de vanne pouvant être déplacé axialement par une armature magnétique (36) montée de façon mobile dans le support de bobine (24), et
- un deuxième obturateur de vanne (38) placé devant le deuxième siège de vanne (44) et couplé en mouvement avec le premier obturateur de vanne (37) par l'intermédiaire d'au moins un élément de couplage (76) passant devant les deux sièges de vanne (43, 44), et un élément de commande manuelle (65) axialement réglable étant à son tour placé devant celui-ci,
**caractérisé en ce que** le corps de vanne (42) présente une extension de boîtier (62) faisant saillie au-delà du deuxième siège de vanne, dans laquelle sont maintenus tant le deuxième obturateur de vanne (38) que l'élément de commande manuelle (65), de manière accessible depuis l'extérieur, de sorte que ces composants font également partie intégrante de la cartouche d'électrovanne (18).

2. Dispositif de soupape selon la revendication 1, **caractérisé en ce que** l'extension de boîtier (62) présente un couvercle (63) rapporté du côté frontal, qui dispose d'un perçage (67) permettant la commande manuelle de l'élément de commande manuelle (65) depuis l'extérieur.

3. Dispositif de soupape selon la revendication 2, **caractérisé en ce que** le couvercle (63) est fixé par contact de matière, en particulier par un assemblage par soudure.

4. Dispositif de soupape selon la revendication 2 ou 3, **caractérisé en ce que** l'extension de boîtier (62) présente une partie annulaire (59) reliée d'un seul tenant à la pièce de base (58) présentant les sièges de vanne (43, 44), le couvercle (63) étant fixé sur le côté frontal de la partie annulaire.

5. Dispositif de soupape selon l'une des revendications 1 à 4, **caractérisé par** un premier ressort (52) sollicitant le premier obturateur de vanne (37) en direction du premier siège de vanne (43), un deuxième ressort (53) s'appuyant entre le deuxième obturateur de vanne (38) et l'élément de commande manuelle (65) et un troisième ressort (54) s'appuyant entre le corps de vanne (42) et l'élément de commande manuelle (65) et précontraignant l'élément de commande manuelle (65) dans une position au repos.

6. Dispositif de soupape selon la revendication 5, **caractérisé en ce que** le premier obturateur de vanne (37) est disposé sur l'armature magnétique mobile (36), le premier ressort (52) agissant sur l'armature magnétique mobile (36).

7. Dispositif de soupape selon l'une des revendications 1 à 6, **caractérisé en ce que** plusieurs éléments de couplage en forme de tige (76), parallèles les uns aux autres, sont regroupés en une unité de couplage (76) sur laquelle le deuxième obturateur de vanne (38) est immobilisé à une extrémité, et qui peut s'appuyer à l'autre extrémité sur l'armature magnétique mobile (36) présentant le premier obturateur de vanne (37).

8. Dispositif de soupape selon la revendication 7, **caractérisé en ce que** l'unité de couplage (76) est insérée dans le corps de vanne (42) depuis le côté de l'extension de boîtier (62), les éléments de couplage (76) passant par des canaux de liaison (77) disposés sur la périphérie des sièges de vanne (43, 44).

9. Dispositif de soupape selon l'une des revendications 1 à 8, **caractérisé en ce que** les deux sièges de vanne (43, 44) sont affectés respectivement à un canal de vanne propre à chacun d'eux (45, 46), qui débouche sur le corps de vanne (42) du côté de la périphérie.

10. Dispositif de soupape selon la revendication 9, **caractérisé en ce que** les deux canaux de vanne (45, 46) présentent respectivement une branche principale (93) traversant diamétralement le corps de vanne (62) dans la région située entre les deux sièges de vanne (43, 44), et une branche secondaire (93a) reliée à la branche principale (93) et débouchant sur l'un des sièges de vanne (43, 44).

11. Dispositif de soupape selon les revendications 9 et 10, **caractérisé en ce qu'**un canal de vanne supplémentaire (47) débouchant sur le corps de vanne (42) du côté de la périphérie part de la chambre de vanne (57) recevant le deuxième obturateur de vanne (38).

12. Dispositif de soupape selon l'une des revendications 1 à 11,
**caractérisé en ce que** le support de bobine (24) et le corps de vanne (42) sont reliés l'un à l'autre d'un seul tenant et sont en particulier composés de matière synthétique.

13. Dispositif de soupape selon l'une des revendications 1 à 12, **caractérisé par** un support de cartouche (84) avec au moins un logement (85) traversant celui-ci, dans lequel une cartouche d'électrovanne (18) avec son corps de vanne (42) est insérée.

14. Dispositif de soupape selon la revendication 13, **caractérisé en ce que** le corps de vanne (42) fait saillie du support de cartouche (84) par sa section terminale (88) formée par l'extension de boîtier (62), du côté opposé à l'unité magnétique (22).

15. Dispositif de soupape selon la revendication 13 ou 14, **caractérisé en ce que** le support de cartouche (84) fait partie d'un boîtier de vanne (83) entourant au moins en partie l'unité magnétique (22) de la cartouche d'électrovanne (18).

16. Dispositif de soupape selon la revendication 15, **caractérisé par** un couvercle de boîtier de vanne (97) disposé du côté de l'unité magnétique (22), opposé au support de cartouche (84), couvercle sur le côté intérieur duquel des moyens de sollicitation (100) sont rapportés qui sollicitent l'unité magnétique (22) en direction du support de cartouche (84).

17. Dispositif de soupape selon l'une des revendications 13 à 16, **caractérisé en ce que** le corps de vanne (42) présente au moins dans sa section plongeant dans le logement (85) une forme s'amincissant de façon conique vers l'extrémité libre, le logement associé (85) présentant dans la région correspondante une conformation complémentaire.

18. Dispositif de soupape selon l'une des revendications 13 à 17, **caractérisé par** des canaux de support de cartouche (92) s'étendant dans le support de cartouche (84), débouchant dans le logement (85) du côté de la périphérie, qui sont reliés à des canaux de vanne (45, 46, 47) débouchant sur la périphérie extérieure du corps de vanne (42).

19. Dispositif de soupape selon l'une des revendications 13 à 18, **caractérisé en ce que** le support de cartouche (84) est muni de plusieurs cartouches d'électrovanne (18) insérées dans des logements correspondants (85).

20. Dispositif de soupape selon l'une des revendications 13 à 19, **caractérisé en ce que** le support de cartouche (84) muni d'au moins une cartouche d'électrovanne (18) fait partie d'un étage de commande pilote (3) disposé au niveau d'une vanne principale (2) à commande fluidique.
